# EUROPÄISCHE PATENTSCHRIFT

(11) **EP 0 562 081 B1**
(45) Veröffentlichungstag und Bekanntmachung des Hinweises auf die Patenterteilung: **04.02.1998**
(21) Anmeldenummer: 92921290.0
(22) Anmeldetag: 14.10.1992
(51) Int. Cl.: C08L 23/16, C08L 23/02, B32B 27/32, B60R 13/02

(54) **WITTERUNGSBESTÄNDIGE, WEICHMACHERFREIE, TIEFZIEHBARE FOLIE**
WEATHER-RESISTANT, UNPLASTICIZED DEEP-DRAWABLE FOIL
FEUILLE APTE A L'EMBOUTISSAGE PROFOND, NON PLASTIFIEE ET RESISTANT AUX INTEMPERIES

(30) Priorität: 15.10.1991 DE 4134111
(43) Veröffentlichungstag der Anmeldung: 29.09.1993
(73) Patentinhaber: Benecke-Kaliko Aktiengesellschaft, D-30419 Hannover (DE)
(72) Erfinder: KOPYTKO, Walter, D-8264 Waldkraiburg (DE)
(74) Vertreter: Hagemann, Heinrich, Dr.rer.nat., Dipl.-Chem.
(86) Internationale Anmeldenummer: EP9202358
(87) Internationale Veröffentlichungsnummer: WO9308232

(56) Entgegenhaltungen:
- EP-A- 0 203 399
- FR-A- 2 323 735
- US-A- 3 888 949

## Beschreibung

Die Erfindung betrifft eine witterungsbeständige, weichmacherfreie, tiefziehbare Folie auf der Basis eines teilkristallinen Ethylen-Propylen-Dien-Terpolymers, eines Homo- und/oder Copolymers eines Alkens, von Stabilisatoren und gegebenenfalls Füllstoffen, Gleitmitteln, Farbmitteln sowie anderen üblichen Zusatzstoffen.

Eine Folie der oben beschriebenen Art wird in der EP-A-0 203 399 beschrieben. Diese Folie wird zur Innenverkleidung und zur Ausstattung von Kraftfahrzeugen verwendet, so z.B. für Seitenverkleidungen, Crashpads, Armaturenbretter, Kopfstützen, für den Himmel oder für die Seitenverkleidung als Korrosionsschutz anstelle von üblichen Weich-PVC-Folien. Diese Aufzählung von Anwendungsmöglichkeiten ist nicht erschöpfend. Da die Folie nach der EP-A-0 203 399 keinen Weichmacher enthält, sind die mit dessen Ausschwitzen verbundenen Nachteile ausgeschlossen. In den angesprochenen Anwendungsbereichen zeigt sie gute Eigenschaften, wie z.B. hohe Beanspruchung, gute Bruchfestigkeit, hohe Kälteflexibilität, gute Kerbschlagzähigkeit sowie gute Wärmeform- und Witterungsbeständigkeit. Hierzu ist es erforderlich, daß das eingangs beschriebene Terpolymer einen Schmelzindex MFI (230/5) von 0,5 bis 2,0 g/10 min und das erwähnte Copolymer einen Schmelzindex MFI (230/2,16) von nicht mehr als 2 g/10 min aufweist. Somit muß der Schmelzindex niedrig gehalten werden, um die wünschenswerten Eigenschaften zu erzielen. Ein niedriger Schmelzindex bedeutet eine erschwerte Verarbeitung durch beispielsweise Kalandrieren, Extrudieren oder Gießen.

Der Erfindung liegt die Aufgabe zugrunde, die eingangs beschriebene bekannte Folie so weiterzubilden, daß sie bei den üblichen Verarbeitungstechniken, wie Kalandrieren, Extrudieren und Gießen, besser handhabbar ist und dennoch die für die Praxis wesentlichen Eigenschaftsanforderungen erfüllt.

Erfindungsgemäß wird diese Aufgabe dadurch gelöst, daß die Mischung aus dem teilkristallinen Ethylen-Porpylen-Dien-Terpolymer und dem Homo- und/oder Copolymer des Alkens enthält:
70 bis 30 Gew.-% eines teilkristallinen Ethylen-Propylen-Dien-Terpolymers A) mit etwa 56 bis 76 Gew.-% Ethylen, etwa 15 bis 30 Gew.-% Propylen und etwa 9 bis 14 Gew.-% Terkomponente,
wobei das Terpolymer A) einen Schmelzindex MFI (230/2,16) von etwa 5 bis 15,0 g/10 min aufweist,
und 70 bis 30 Gew.-% eines Homo- und/oder Copolymers B) von Ethylen und/oder Propylen,
wobei das Homo- oder Copolymer einen Schmelzindex MFI (230/2,16) von mehr als 2,5 g/10 min aufweist.

Die erfindungsgemäße Folie enthält demzufolge einen Kunststoff aus den Komponenten A) und B), der bezüglich seiner Ausgangsmonomeren Parallelen zu der EP-A-0 203 399 zeigt. Allerdings wird die Polymerisation der Ausgangsmaterialien der Komponente A) und der Komponente B) derartig gesteuert, daß sich der erfindungsgemäß geforderte Schmelzindex MFI einstellt. Hierbei wird die Polymerisation insbesondere so gesteuert, daß unvernetzte Produkte entstehen. Grundsätzlich ist es aber möglich, die angestrebten Effekte auch bei einer teilweisen Vernetzung zu erzielen. Die Vernetzung darf nicht so weit gehen, daß die Anforderungen an den Schmelzindex MFI (230/2,16) nicht erfüllt werden. Eine weitere Steuerungsmöglichkeit zur Einstellung des gewünschten Schmelzindex besteht darin, eine besonders geeignete Terkomponente heranzuziehen. Der Schmelzindex MFI (230/2,16) der Komponente A) beträgt mindestens etwa 5 und höchstens etwa 15 g/10 min, vorzugsweise etwa 8 bis 12 g/10 min. Als Terkomponente in der Komponente A) kommen insbesondere Dicyclopentadien und Ethylidennorbornen in Frage. Neben dem Schmelzindex MFI der Komponente A) ist für die erfindungsgemäß angestrebten Effekte des weiteren der Schmelzindex MFI der Komponente B) wichtig. Dieser beträgt mindestens etwa 2,5 g/10 min. Ein Höchstwert von etwa 8 g/10 min wird vorzugsweise nicht überschritten. Vorzugsweise wird die Komponente B) durch eine geeignet gesteuerte Polymerisation bzw. durch die Wahl des Mengenverhältnisses Ethylen/Propylen im Falle des Copolymers derartig eingestellt, daß sich beim Kalandrieren ein Schmelzindex MFI (230/2,16) von etwa 2,5 bis 6 g/10 min und/oder beim Extrudieren von nicht mehr als 12 g/10 min ergibt. Die Bestimmungsmethode für den Schmelzindex MFI wird in der DIN 53 735 beschrieben.

Bei einer bevorzugten erfindungsgemäßen Folie besteht die Mischung aus den Komponenten A) und B) zu etwa 52 bis 29 Gew.-% aus dem Ethylen-Propylen-Dien-Terpolymer und zu etwa 48 bis 71 Gew.-% aus dem Ethylen-Propylen-Copolymer. Ein Ethylen-Propoylen-Copolymer ist im Rahmen der Erfindung als Komponente B) besonders geeigent. Es enthält vorzugsweise etwa 5 bis 20 Gew.- % Ethylen. Hiermit werden besonders gute Ergebnisse bei einer engen Molmasse-Verteilung erzielt, so bei einer Molmasse-Verteilung M_{W}/Mₙ kleiner als etwa 10, insbesondere kleiner als etwa 7. Als weitere Copolymere haben sich Ethylen-Copolymere als besonders geeignet erwiesen, wie z.B. ein Ethylen-Copolymer, das etwa 5 bis 20 Gew.-% Octen als Comonomer enthält.

Der erfindungsgemäßen Folie können bekannte Zusatzstoffe einverleibt werden, wie Stabilisatoren, Füllstoffe, Gleitmittel, Farbmittel und dgl. Im allgemeinen ist es vorteilhaft, daß die Folie Stabilisatoren enthält. Hierbei kann es sich um Verarbeitungsstabilisatoren, wie Wärmestabilisatoren und Antioxidantien, aber auch um Stabilisatoren, die eine hohe Lebensdauer und Funktionstüchtigkeit gewährleisten, handeln. Insbesondere werden hierzu sterisch gehinderte phenolische Antioxidantien, phenolische Phosphite, Thioester aliphatischer Carbonsäuren, Epoxy-Derivate und dergleichen herangezogen. Vorzugsweise entfallen etwa 0,1 bis 2,0 Gewichtsteile, insbesondere etwa 1,1 bis 1,8 Gewichtsteile Stabilisator auf 100 Gewichtsteile der Kunststoffmischung aus den Komponenten A) und B). Für die Zwecke der Erfindung ist es nicht erforderlich, anders als nach der Forderung der EP-A-0 203 399, Gleitmittel heranzuziehen. Ihr Einsatz ist in Einzelfällen von Vorteil. Geeignete Gleitmittel sind Metallsalze von Carbonsäuren, Montansäureester, hydrierte Kohlenwasserstoffharze. Die Menge des Gleitmittels beträgt vorzugsweise etwa 0,1 bis 2,5 Gewichtsteile pro 100 Gewichtsteile Kunststoff. Zur Einfärbung können in der erfindungsgemäßen Folie beliebige Farbmittel eingesetzt werden, wie Weißpigmente, insbesondere Titandioxid, aber auch schwärzende Pigmente, wie z.B. Ruß. Die vorteilhafte Menge der Farbmittel beträgt etwa 1 bis 10 Gewichtsteile pro 100 Gewichtsteile Kunststoff. Wird Ruß als Füllstoff herangezogen, so führt dies zu einer erhöhten Witterungsbeständigkeit. Ferner können verstärkende Füllstoffe, wozu halbaktive und aktive Ruße deren Mischungen sowie Kalium-Aluminium-Silikat und Talkum zählen, verwendet werden. Die Füllstoffe sind vorzugsweise feinteilig.

Für die Vorteile, die mit der vorliegenden erfindungsgemäßen Folie verbunden sind, ist die Art des Herstellungsverfahrens nicht entscheidend. So können die Ausgangsmaterialien z.B. durch Kalandrieren, Extrudieren oder durch Gießen verarbeitet werden. Das Kalandrieren ist ein besonders wirtschaftliches Verfahren. Auch ist es möglich, eine stärkere Folie anhand dünnerer Folien herzustellen, was durch Laminieren oder Duplieren von kalandrierten, extrudierten und/oder dünneren Folien erfolgen kann, die das erfindungsgemäße Anforderungsprofil erfüllen.

Von Vorteil ist es, wenn die erfindungsgemäße Folie eine Dicke von etwa 0,2 bis 0,8mm aufweist. Dieser Bereich kann mehr oder weniger weit überschritten werden. Jedoch sind regelmäßig mit einer Stärke von mehr als etwa 3 mm keine relevanten Vorteile verbunden. Bis zu einer Stärke von etwa 3 mm werden die wünschenswerten technischen Effekte bei der Anwendung bereits erzielt. Eine größere Stärke würde nur einen unnötigen Kostenaufwand bedeuten.

Die erfindungsgemäße Folie weist im Ergebnis diejenigen technischen Vorteile auf, die der in der EP-A-0 203 399 beschriebenen Folie zugeschrieben werden, allerdings mit dem zusätzlichen überraschenden Vorteil der besseren Verarbeitbarkeit bei den angesprochenen Verarbeitungstechniken, wie Kalandrieren und dergleichen. Besonders herausragend ist sie bezüglich folgender Eigenschaften: Tiefziehbarkeit, Kältebeständigkeit, Dehnung, Wärme-, Licht- und Witterungsbeständigkeit, besondere Eignung zur Prägung matter Oberflächen, Temperaturbeständigkeit eines geformten Teiles aus der Folie, d.h. Formbeständigkeit, kein Weißbruch der Folie beim Verformen, wie dem Tiefziehverfahren und Vakuumverformen, aber auch bei der Kaltverformung. Dabei kann die erfindungsgemäße Folie allen Anwendungszwecken dienen, die bereits im Zusammenhang mit der EP-A-0 203 399 beschrieben wurden, insbesondere zur Herstellung von Formteilen, wie Seitenverkleidungen, Türinnenverkleidungen, Armstützen, Tunnelabdeckungen, Armaturenbretter, Himmel, ganz oder teilweise, oder Crashpads. Ein Hinterschäumen mit Polyurethanschaum, die Verbindung mit anderen Folien oder textilen Flächengebilden im Außenbereich direkt oder die Verwendung als Schutzabdeckung ist ohne weiteres möglich.

Die Erfindung wird nachfolgend anhand verschiedener Beispiele erläutert.

### Beispiele

Anhand folgender Rezepturen wurde eine erfindungsgemäße Folie hergestellt:

| Beispiel | 1 (Gew.-%) | 2 (Gew.-%) | 3 (Gew.-%) | 4 (Gew.-%) | 5 (Gew.-%) |
|---|---|---|---|---|---|
| Ethylen-Propylen-Dicyclopentadien-Terpolymer (Komponente A) | 29 | 52 | 52 | 44 | 44 |
| Polypropylen-Copolymer (Komponente B₁) | 25 | 9 | 25 | 21 | - |
| Polyethylen-Copolymer (Komponente B₂) | 29 | 25 | 9 | 21 | 44 |
| Kalium-Aluminium-Silikat (Füllstoff) | 17 | 14 | 14 | 14 | 12 |
| Ruß (Füllstoff) | - | 1 | 0,8 | 2,5 | 2,5 |
| Calciumstearat (Gleitmittel) | 0,5 | 0,5 | 0,5 | 0,5 | 0,5 |
| 3,5-di-tert.-Butyl-4-hydroxyphenyl-propionsäureester des Pentaerythrits (Stabilisator) | 0,5 | 0,5 | 0,5 | 0,5 | 0,5 |
| Anmerkung: Komponente A: 70 Gew.-% Ethylen, 16 Gew.-% Propylen und 14 Gew.-% Dicyclopentadien. Komponente B₁: 92 Gew.-% Propylen und 8 Gew.-% Ethylen. Komponente B₂: 94 Gew.-% Ethylen und 6 Gew.-% Octen-1. | | | | | |

Die oben bezeichneten unterschiedlichen Ausgangsmaterialien bzw. Ausgangsgemische der verschiedenen Beispiele wurden in einem Zweischnecken-Extruder bei einer Temperatur von etwa 210°C plastifiziert und homogenisiert und dann einem Kalander zur Folienausbildung zugeführt. Die erhaltenen Folien einer Dicke von etwa 1 mm hatten folgende Eigenschaften:

| Beispiel | 1 | 2 | 3 | 4 | 5 |
|---|---|---|---|---|---|
| Härte (Shore D/15 s) nach DIN 53505 | 47 | 40 | 40 | 45 | 35 |
| Ausgangs-Reißdehnung Nach DIN 53455 | 511 | 518 | 520 | 590 | 644 |
| Rest-Reißdehnung bei einer Lagerung von 500 h bei 120°C nach DIN 53455 | 450 | 460 | 465 | 550 | 625 |
| Rest-Reißdehnung nach einer UV-Bestrahlung von 600 h (entspr. DIN 75220), gemessen nach DIN 53455 | 415 | 420 | 430 | 460 | 580 |

## Patentansprüche

1. Witterungsbeständige, weichmacherfreie, tiefziehbare Folie auf der Basis eines teilkristallinen Ethylen-Propylen-Dien-Terpolymers, eines Homo- und/oder Copolymers eines Alkens und gegebenenfalls von Stabilisatoren, Füllstoffen, Gleitmitteln, Farbmitteln sowie anderen üblichen Zusatzstoffen, dadurch **gekennzeichnet,** daß die Mischung aus dem teilkristallinen Ethylen-Propylen-Dien-Terpolymer und dem Homo- und/oder Copolymer des Alkens enthält:
70 bis 30 Gew.-% eines teilkristallinen Ethylen-Propylen-Dien-Terpolymers A) mit etwa 56 bis 76 Gew.-% Ethylen, etwa 15 bis 30 Gew.-% Propylen und etwa 9 bis 14 Gew.-% Terkomponente,
wobei das Terpolymer A) einen Schmelzindex MFI (230/2,16) von etwa 5 bis 15,0 g/10 min aufweist,
und 70 bis 30 Gew.-% eines Homo- und/oder Copolymers B) von Ethylen und/oder Propylen,
wobei das Homo- oder Copolymer einen Schmelzindex MFI (230/2,16) von mehr als 2,5 g/10 min aufweist.

2. Folie nach Anspruch 1, dadurch gekennzeichnet, daß die Mischung aus den Komponenten A) und B) Füllstoffe enthält.

3. Folie nach Anspruch 2, dadurch gekennzeichnet, daß etwa 12 bis 30 Gewichtsteile Füllstoff auf 100 Gewichtsteile der Mischung aus den Komponenten A) und B) entfallen.

4. Folie nach mindestens einem der vorhergehenden Ansprüche, dadurch gekennzeichnet, daß in der Folie Füllstoffe in Form von Kalium-aluminium-silikat, Talkum, Kreide, Kaolin und/oder Ruß enthalten sind.

5. Folie nach mindestens einem der vorhergehenden Ansprüche, dadurch gekennzeichnet, daß die Mischung aus den Komponenten A) und B) etwa 52 bis 29 Gew.-% Ethylen-Propylen-Dien-Terpolymer und etwa 48 bis 71 Gew.-% Ethylen-Propylen-Copolymer enthält.

6. Folie nach mindestens einem der vorhergehenden Ansprüche, dadurch gekennzeichnet, daß die Komponente B) beim Kalandrieren einen Schmelzindex MFI (230/2,16) von etwa 2,5 bis 6 g/10 min und beim Extrudieren einen Schmelzindex von nicht mehr als 12 g/10 min aufweist.

7. Folie nach mindestens einem der vorhergehenden Ansprüche, dadurch gekennzeichnet, daß die Komponente A) mindestens etwa 65 Gew.-% Ethylen enthält.

8. Folie nach mindestens einem der vorhergehenden Ansprüche, dadurch gekennzeichnet, daß das Ethylen-Propylen-Copolymer etwa 5 bis 20 Gew.-% Ethylen enthält.

9. Folie nach mindestens einem der vorhergehenden Ansprüche, dadurch gekennzeichnet, daß das Ethylen-Propylen-Copolymer eine enge Molmasse-Verteilung M_{W}/Mₙ von < etwa 10, insbesondere < etwa 7, aufweist.

10. Folie nach mindestens einem der vorhergehenden Ansprüche, dadurch gekennzeichent, daß die Kompondente B) ein Ethylen-Copolymers darstellt, das etwa 5 bis 20 Gew.-% Octen als Comonomer enthält.

## Claims

1. Weather-resistant, unplasticized, deep-drawable film based on a partly crystalline ethylene-propylene-diene terpolymer, a homopolymer and/or copolymer of an alkene and optionally stabilizers, fillers, lubricants, colouring agents and other conventional additives, characterized in that the mixture of the partly crystalline ethylene-propylene-diene terpolymer and the homopolymer and/or copolymer of the alkene contains:
70 to 30 wt.% of a partly crystalline ethylene-propylene-diene terpolymer A) with approximately 56 to 76 wt.% ethylene, approximately 15 to 30 wt.% propylene and approximately 9 to 14 wt.% tercomponent,
in which the terpolymer A) has a melt index MFI (230/2.16) of approximately 5 to 15 g/10 min,
and 70 to 30 wt.% of a homopolymer and/or cpolymer B) of ethylene and/or propylene,
in which the homopolymer or copolymer has a melt index MFI (230/2.16) of more than 2.5 g/10 min.

2. Film according to claim 1, characterized in that the mixture of components A) and B) contains fillers.

3. Film according to claim 2, characterized in that there are approximately 12 to 30 parts by weight filler to 100 parts by weight of the mixture of components A) and B).

4. Film according to at least one of the preceding claims, characterized in that the film contains fillers in the form of potassium aluminosilicate, talc, chalk, kaolin and/or carbon black.

5. Film according to at least one of the preceding claims, characterized in that the mixture of components A) and B) contains approximately 52 to 29 wt.% ethylene-propylene-diene terpolymer and approximately 48 to 71 wt.% ethylene-propylene copolymer.

6. Film according to at least one of the preceding claims, characterized in that component B), on calendering, has a melt index MFI (230/2.16) of approximately 2.5 to 6 g/10 min and, on extruding, a melt index of no more than 12 g/10 min.

7. Film according to at least one of the preceding claims, characterized in that component A) contains at least approximately 65 wt.% ethylene.

8. Film according to at least one of the preceding claims, characterized in that the ethylene-propylene copolymer contains approximately 5 to 20 wt.% ethylene.

9. Film according to at least one of the preceding claims, characterized in that the ethylene-propylene copolymer has a narrow molecular weight distribution M_{W}/Mₙ of < approximately 10, particularly < approximately 7.

10. Film according to at least one of the preceding claims, characterized in that component B) is an ethylene copolymer, which contains approximately 5 to 20 wt.% octene as the comonomer.

## Revendications

1. Feuille apte à l'emboutissage profond, dépourvue de plastifiant, stable aux facteurs atmosphériques, à base d'un terpolymère éthylène-propylène-diène partiellement cristallisé, d'un homopolymère et/ou d'un copolymère d'un alcène et le cas échéant d'agents stabilisants, de charges, de lubrifiants, de matières colorantes ainsi que d'autres additifs classiques, caractérisée en ce que le mélange du terpolymère éthylène-propylène-diène partiellement cristallin et de l'homopolymère et/ou du copolymère de l'alcène contient :
70 à 30 % en poids d'un terpolymère éthylène-propylène-diène partiellement cristallin A) avec environ 56 à 76 % en poids d'éthylène, environ 15 à 30 % en poids de propylène et environ 9 à 14 % en poids du troisième composant,
le terpolymère A) présentant un indice de fluidité MFI (230/2,16) d'environ 5 à 15,0 g/10 minutes,
et 70 à 30 % en poids d'un homopolymère et/ou d'un copolymère B) d'éthylène et/ou de propylène,
l'homopolymère ou copolymère présentant un indice de fluidité MFI (230/2,16) supérieur à 2,5 g/10 minutes.

2. Feuille suivant la revendication 1, caractérisée en ce que le mélange des composants A) et B) contient des charges.

3. Feuille suivant la revendication 2, caractérisée en ce qu'il y a environ 12 à 30 parties en poids de charge pour 100 parties en poids du mélange des composants A) et B).

4. Feuille suivant l'une au moins des revendications précédentes, caractérisée en ce qu'elle contient des charges sous forme de silicate double de potassium et d'aluminium, de talc, de craie, de kaolin et/ou de noir de fumée.

5. Feuille suivant au moins l'une des revendications précédentes, caractérisée en ce que le mélange des composants A) et B) contient environ 52 à 29 % en poids d'un terpolymère éthylène-propylène-diène et environ 48 à 71 % en poids de copolymère éthylène-propylène.

6. Feuille suivant au moins l'une des revendications précédentes, caractérisée en ce que le composant B) présente lors du calandrage un indice de fluidité MFI (230/2,16) d'environ 2,5 à 6 g/10 minutes et, lors de l'extrusion, un indice de fluidité ne dépassant pas 12 g/10 minutes.

7. Feuille suivant au moins l'une des revendications précédentes, caractérisée en ce que le composant A) contient au moins environ 65 % en poids d'éthylène.

8. Feuille suivant au moins l'une des revendications précédentes, caractérisée en ce que le copolymère éthylène-propylène contient environ 5 à 20 % en poids d'éthylène.

9. Feuille suivant au moins l'une des revendications précédentes, caractérisée en ce que le copolymère éthylène-propylène présente une répartition de masse moléculaire Mₚ/Mₙ inférieure à environ 10, notamment inférieure à environ 7.

10. Feuille suivant au moins l'une des revendications précédentes, caractérisée en ce que le composant B) constitue un copolymère d'éthylène qui contient environ 5 à 20 % en poids d'octène comme comonomère.
